# EUROPÄISCHE PATENTSCHRIFT

(11) **EP 0 533 657 B1**
(45) Veröffentlichungstag und Bekanntmachung des Hinweises auf die Patenterteilung: **30.03.1994**
(21) Anmeldenummer: 90900159.6
(22) Anmeldetag: 13.12.1989
(51) Int. Cl.: B62D 3/08, F16H 55/28

(54) **LENKGETRIEBE, INSBESONDERE FÜR KRAFTFAHRZEUGE**
STEERING GEAR, IN PARTICULAR FOR MOTOR VEHICLES
COMMANDE DE DIRECTION, NOTAMMENT POUR VEHICULES AUTOMOBILES

(30) Priorität: 15.12.1988 DE 3842187
(43) Veröffentlichungstag der Anmeldung: 31.03.1993
(73) Patentinhaber: ZF FRIEDRICHSHAFEN Aktiengesellschaft, 88038 Friedrichshafen (DE)
(72) Erfinder: ELSER, Dieter, D-7087 Essingen (DE); SCHURR, Rudolf, D-7080 Aalen (DE)
(86) Internationale Anmeldenummer: EP8901531
(87) Internationale Veröffentlichungsnummer: WO9006879

(56) Entgegenhaltungen:
- DE-A- 2 735 958
- FR-A- 724 691
- FR-A- 2 076 982

## Beschreibung

Die Erfindung betrifft ein Lenkgetriebe, insbesondere für Kraftfahrzeuge, nach dem Oberbegriff des Anspruches 1. Ein solches Lenkgetriebe besitzt eine ein Zahnsegment tragende Lenkwelle und eine in das Zahnsegment mit einem Zahnstangenprofil eingreifende, durch eine Lenkspindel axial verschiebbare Lenkmutter. Zum Ausschalten des zwischen dem Zahnsegment und dem Zahnstangenprofil nach längerem Betrieb des Lenkgetriebes auftretenden Verzahnungsspiels ist ein Federdruckelement Vorgesehen. Dieses ist außerhalb der zur Verzahnungsebene des Zahnstangenprofils senkrechten, die Lenkspindelachse enthaltenden Ebene angeordnet und übt in der Geradeausfahrtstellung des Lenkgetriebes eine Verdrehkraft auf die Lenkmutter aus.

Ein derartiges Lenkgetriebe ist bekannt aus der DE-PS 27 35 958. Bei diesem bekannten Lenkgetriebe besteht das Federdruckelement aus mehreren Einzelteilen, nämlich einem Druckstift, einer Feder und einer Mutter. Mit der bekannten Anordnung ist zwar ein guter selbsttätiger Zahnspielausgleich möglich. Da das Federdruckelement jedoch aus mehreren Einzelteilen besteht, ist der Aufwand für die Herstellung und Montage relativ hoch.

Der Erfindung liegt die Aufgabe zugrunde, bei dem bekannten Lenkgetriebe die Einrichtung zum selbsttätigen Zahnspielausgleich in der Form eines Federdruckelementes äußerst raumsparend, montagefreundlich und kostensparend auszubilden und unterzubringen.

Diese Aufgabe wird durch das im Anspruch 1 gekennzeichnete Lenkgetriebe gelöst. Zweckmäßige und vorteilhafte Ausgestaltungen sind in den Unteransprüchen angegeben.

Die Lösung der Aufgabe besteht vor allem darin, daß das Federdruckelement einteilig ausgebildet ist und zwischen der Lenkwelle und dem Zahnstangenprofil angeordnet ist. Besonders vorteilhaft ist es, wenn das Federdruckelement aus zwei konzentrisch zueinander auf der Lenkwelle angeordneten Federringen besteht, die miteinander verbunden sind, daß der äußere Federring sich in Geradeausfahrtstellung mit einem radial nach außen gerichteten Fortsatz an dem Zahnstangenprofil mit Vorspannung abstützt, und daß der innere Federring sich an seiner dem Zahnstangenprofil zugewandten Seite an der Lenkwelle abstützt. Da das Federdruckelement einteilig ausgebildet ist, kann es einfach als Stanz-, Brennschneid-, Laserstrahlschneid- oder Feingußteil hergestellt werden. Das Federdruckelement kann sehr einfach am Ende des Zahnsegmentes der Lenkwelle anstelle einer Anlaufscheibe auf die Lenkwelle aufgeschoben werden.

Wird der Fortsatz des äußeren Federringes an die Verzahnung des Zahnsegmentes angepaßt, und weist der Fortsatz insbesondere die Form des mittleren Zahnes des Zahnsegmentes auf, so wird zusammen mit dem Zahnstangenprofil der Lenkmutter ein "abwälzender Druckpunkt" erreicht. Dadurch bleiben die Rücklaufeigenschaften des Lenkgetriebes erhalten, und in der Mittellage entstehen trotz der Federkraft nur sehr geringe zusätzliche Reibungskräfte.

Um eine gute Dauerfestigkeit des Federdruckelementes zu erreichen, werden die beiden Federringe mit einem spannungsoptimierten Querschnittsverlauf ausgebildet. Dies bedeutet, daß in den höher beanspruchten Zonen die Federringe entsprechend breiter ausgebildet sind.

Da nur in einem begrenzten Bereich beiderseits der Geradeausfahrtstellung, in dem der größte Verschleiß an der Verzahnung auftritt, ein selbsttätiger Zahnspielausgleich erforderlich ist, wird das Federdruckelement nur für diesen Bereich ausgelegt. Dies bedeutet, daß wenigstens der äußere der beiden Federringe auf der Lenkwelle verdrehfest gehalten sein muß.

Im folgenden wird die Erfindung anhand eines in der Zeichnung dargestellten Beispieles näher erläutert.
Es zeigt:

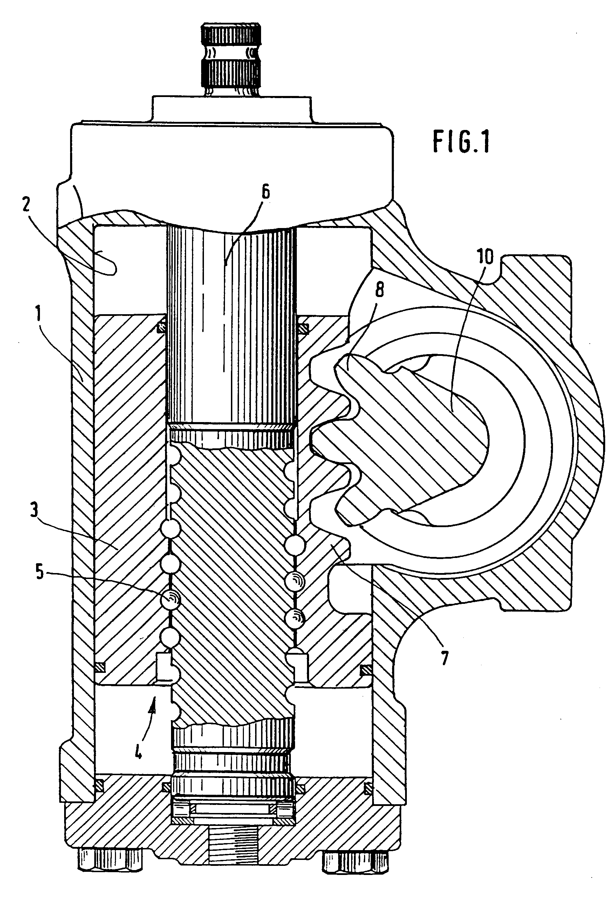

- Fig. 1: einen Längsschnitt durch das erfindungsgemäße Lenkgetriebe,

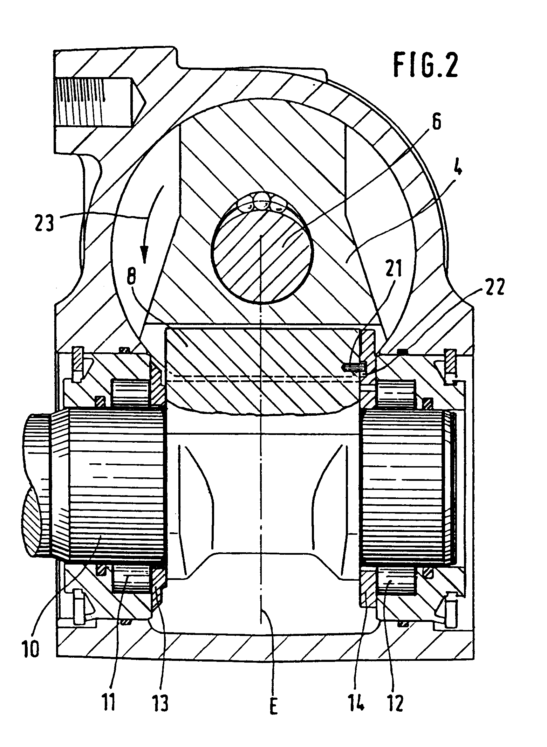

- Fig. 2: einen Querschnitt durch das Lenkgetriebe der Fig. 1,

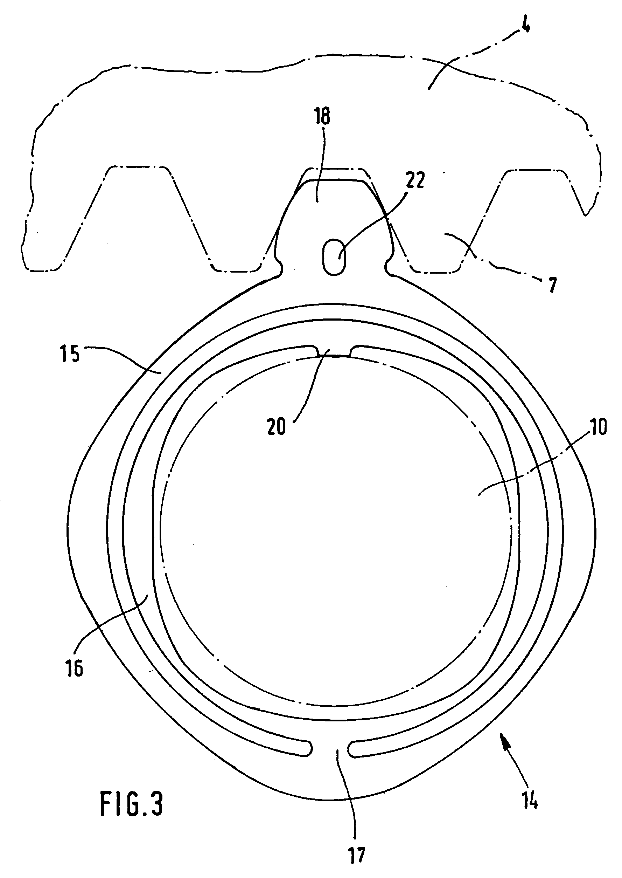

- Fig. 3: eine vergrößerte Draufsicht auf das Federdruckelement.

Ein herkömmliches Lenkgetriebe enthält in einem Lenkgetriebegehäuse 1 einen Servozylinder 2, in dem ein Servokolben 3 axial verschiebbar angeordnet ist. Der Servokolben 3 enthält eine Lenkmutter 4, die über eine Kugelumlaufeinrichtung 5 in trieblicher Verbindung mit einer Lenkspindel 6 steht. Die Lenkspindel 6 ist in dem Lenkgetriebegehäuse 1 drehbar aber axial unverschiebbar gelagert. Der Servokolben 3 bzw. die Lenkmutter 4 ist über ein Zahnstangenprofil 7 trieblich mit einem Zahnsegment 8 einer Lenkwelle 10 verbunden. Die Anwendung der Erfindung ist nicht beschränkt auf Lenkgetriebe mit Hilfskraftunterstützung. Eine Anwendung ist vielmehr möglich bei allen Lenkgetrieben, die ein Zahnsegment und ein dazugehöriges Zahnstangenprofil besitzen.

Die Lenkwelle 10 ist in dem Lenkgetriebegehäuse 1 über Lager 11 und 12 drehbar gelagert. Die Abstützung in axialer Richtung erfolgt nach einer Seite über eine Anlaufscheibe 13. Die Anlaufscheibe zur Abstützung der Lenkwelle 10 in der anderen Richtung ist ersetzt durch ein Federdruckelement 14. Das Federdruckelement 14 liegt an einer Stirnfläche des Zahnsegmentes 8 an und befindet sich damit außerhalb der zur Verzahnungsebene des Zahnstangenprofils 7 senkrechten, die Achse der Lenkspindel 6 enthaltenden Ebene E.

Das Federdruckelement 14 besteht aus zwei konzentrisch zueinander auf der Lenkwelle 10 angeordneten Federringen 15 und 16. Die beiden Federringe 15 und 16 sind an ihrer Seite, die von dem Zahnstangenprofil 7 abgewandt ist, durch einen Verbindungssteg 17 miteinander verbunden. Der äußere Federring 15 weist einen Fortsatz 18 auf, der radial nach außen gerichtet ist, in seiner Form an den mittleren Zahn des Zahnsegmentes 8 angepaßt ist und der sich in Geradeausfahrtstellung des Lenkgetriebes an dem Zahnstangenprofil 7 mit Vorspannung abstützt. Der innere Federring 10 stützt sich an seiner dem Zahnstangenprofil 7 zugewandten Seite über einen radial nach innen gerichteten Nocken 20 an der Lenkwelle 10 ab.

Die beiden Federringe 15 und 16 besitzen einen spannungsoptimierten Querschnittsverlauf. Dieser günstige Querschnittsverlauf besteht darin, daß die Federringe 15 und 16 in ihren Bereichen mit höchster Biegebeanspruchung in radialer Richtung breiter ausgeführt sind als in den übrigen Bereichen.

Der bei längerem Betrieb des Lenkgetriebes auftretende Verschleiß an dem Zahnstangenprofil 7 und an dem Zahnsegment 8 ist am größten im Mittelbereich, d. h. im Geradesausfahrtbereich des Lenkgetriebes. Deshalb kann der selbsttätige Zahnspielausgleich auf diesen Mittelbereich begrenzt sein. Um den zahnförmigen Fortsatz 18 in seiner genauen Lage zu halten, muß das Federdruckelement 14 auf der Lenkwelle 10 gegen Verdrehen gesichert werden. Hierfür ist in dem mittleren Zahn des Zahnsegmentes 8 stirnseitig ein Stift 21 eingesetzt, der in eine Nut 22 des äußeren Zahnringes 15 eingreift. Um den Federweg des äußeren Federringes 15 zu erlauben, ist die Nut 22 länglich ausgebildet.

Durch das Federdruckelement 14 wird auf das Zahnstangenprofil 7 der Lenkmutter 4 eine Verdrehkraft in Richtung des Pfeiles 23 ausgeübt. Dadurch wird bei einem auftretenden Verschleiß der Verzahnung des Zahnstangenprofiles 7 und/oder des Zahnsegmentes 8 die Lenkmutter 4 gekippt, so daß die Verzahnung selbsttätig spielfrei eingestellt wird.

### Bezugszeichen

- 1: Lenkgetriebegehäuse
- 2: Servozylinder
- 3: Servokolben
- 4: Lenkmutter
- 5: Kugelumlaufeinrichtung
- 6: Lenkspindel
- 7: Zahnstangenprofil
- 8: Zahnsegment
- 9: -
- 10: Lenkwelle
- 11: Lager
- 12: Lager
- 13: Anlaufscheibe
- 14: Federdruckelement
- 15: Federring
- 16: Federring
- 17: Verbindungssteg
- 18: Fortsatz
- 19: -
- 20: Nocken
- 21: Stift
- 22: Nut
- 23: Pfeil

## Patentansprüche

1. Lenkgetriebe, insbesondere für Kraftfahrzeuge, mit einer ein Zahnsegment (8) tragenden Lenkwelle (10) und einer in das Zahnsegment (8) mit einem Zahnstangenprofil (7) eingreifenden, durch eine Lenkspindel (6) axial verschiebbaren Lenkmutter (4), wobei zum Ausschalten des zwischen dem Zahnsegment (8) und dem Zahnstangenprofil (7) auftretenden Verzahnungsspiels ein Federdruckelement (14) vorgesehen ist, das außerhalb der zur Verzahnungsebene des Zahnstangenprofils (7) senkrechten, die Achse der Lenkspindel (6) enthaltenden Ebene (E) angeordnet ist und das in der Geradeausfahrtstellung des Lenkgetriebes eine Verdrehkraft auf die Lenkmutter (4) ausübt, dadurch **gekennzeichnet,** daß das
Federdruckelement (14) einteilig scheibenförmig ausgebildet ist, zwischen der Lenkwelle (10) und dem Zahnstangenprofil (7) angeordnet ist und sich einerseits in Geradeausfahrtstellung mit einem radial nach außen gerichteten Fortsatz (18) an dem Zahnstangenprofil (7) mit Vorspannung abstützt und andererseits an der Lenkwelle (10) abstützt.

2. Lenkgetriebe nach Anspruch 1, dadurch **gekennzeichnet,**
- daß das Federdruckelement (14) aus zwei konzentrisch zueinander auf der Lenkwelle (10) angeordneten Federringen (15, 16) besteht,
- daß die beiden Federringe (15, 16) miteinander verbunden sind,
- daß der radial nach außen gerichtete Fortsatz (18) an dem äußeren Federring (15) angeordnet ist und
- daß der innere Federring (16) sich an seiner dem Zahnstangenprofil (7) zugewandten Seite an der Lenkwelle (10) abstützt.

3. Lenkgetriebe nach Anspruch 2, dadurch **gekennzeichnet,** daß die beiden Federringe (15, 16) an ihrer von dem Zahnstangenprofil (7) abgewandten Seite miteinander durch einen Verbindungssteg (17) verbunden sind.

4. Lenkgetriebe nach Anspruch 2, dadurch **gekennzeichnet,** daß der Fortsatz (18) des äußeren Federringes (15) eine an die Verzahnung des Zahnsegmentes (8) angepaßte Form aufweist.

5. Lenkgetriebe nach Anspruch 4, dadurch **gekennzeichnet,** daß der Fortsatz (18) die Form des mittleren Zahnes des Zahnsegmentes (8) aufweist.

6. Lenkgetriebe nach Anspruch 2, dadurch **gekennzeichnet,** daß der innere Federring (16) einen radial nach innen gerichteten Nocken (20) für die Abstützung an der Lenkwelle (10) aufweist.

7. Lenkgetriebe nach einem der Ansprüche 2 bis 6, dadurch **gekennzeichnet,** daß die beiden Federringe (15, 16) einen spannungsoptimierten Querschnittsverlauf aufweisen.

8. Lenkgetriebe nach Anspruch 1 oder 2, dadurch **gekennzeichnet,** daß das Federdruckelement (14) auf der Lenkwelle (10) verdrehfest gehalten ist.

9. Lenkgetriebe nach Anspruch 8, dadurch **gekennzeichnet,** daß das Federdruckelement (14) durch einen in dem Zahnsegment (8) befestigten Stift (21) über eine in dem äußeren Federring (15) angeordnete Nut (22) gegen Verdrehung gesichert ist.

## Claims

1. The present invention concerns a steering gear, in particular for motor vehicles, with a steering shaft (10), carrying a toothed segment (8) and a steering-gear nut (4) which engages in the toothed segment (8) by means of a toothed rack (7) and which can be displaced in an axial direction by means of a steering spindle (6), whereby a spring thrust element (14) is located outside the plane (E) which is vertical to the gearing plane of the toothed rack (7) and includes the axis of the steering spindle (6) in order to exclude the gear play between the toothed segment (8) and the toothed rack (7) in such a way that the spring thrust element (14) exerts a torsional force on the steering-gear nut (4) when the steering gear is in the neutral position,
**characterized** in that,
the spring pressure element (14) is a single component in the form of a disc, located between the steering shaft (10) and the toothed rack (7), and when the steering gear is in the neutral position, the spring pressure element (14) is braced at one end against the toothed rack (7) by means of an external radial extension (18) which is under pre-load, with the other end of the spring pressure element (14) being braced against the steering shaft (10).

2. Steering gear in accordance with Claim 1,
**characterized** in that,
- the spring pressure element (14) consists of two spring rings (15, 16) which are located concentrically to one another on the steering shaft (10),
- the two spring rings (15, 16) are connected to one another,
- the external radial extension (18) is located on the outer spring ring (15), and
- the side of the inner spring ring (16) facing the toothed rack (7) is braced against the steering shaft.

3. Steering gear in accordance with Claim 2,
**characterized** in that,
the sides of the two spring rings (15, 16) facing away from the toothed rack (7) are joined together by means of a connecting web (17).

4. Steering gear in accordance with Claim 2,
**characterized** in that,
the shape of the extension (18) to the outer spring ring (15) matches the shape of the gear profile on the toothed segment (8).

5. Steering gear in accordance with Claim 4,
**characterized** in that,
the shape of the extension (18) is that of the central tooth of the toothed segment (8).

6. Steering gear in accordance with Claim 2,
**characterized** in that,
the inner spring ring (16) has a radial cam (20) facing towards the inside in order to provide bracing for the spring ring (16) against the steering shaft (10).

7. Steering gear in accordance with one or more of Claims 2
to 6, **characterized** in that,
the cross-section of the two spring rings (15, 16) is designed to produce optimum load properties.

8. Steering gear in accordance with Claim 1 or Claim 2,
**characterized** in that,
the spring pressure element (14) is held on the steering shaft (10) in a manner which prevents the spring pressure element (14) from rotating.

9. Steering gear in accordance with Claim 8,
**characterized** in that,
the spring pressure element (14) is prevented from rotating by means of a pin (21) which is fixed in the toothed segment (8) and projects into a groove (22) located in the outer spring ring (15).

## Revendications

1. Mécanisme de direction, en particulier pour véhicule automobile, avec un arbre de direction (10) portant un secteur denté (8) et avec un écrou de direction (4) pouvant être déplacé dans le sens axial grâce à une broche de direction (6), engrenant dans le secteur denté (8) avec un profilé à crémaillère (7), sachant qu'un élément à pression de ressort (14) est prévu pour la suppression du jeu de dentures existant entre le secteur denté (8) et le profilé à crémaillère (7), lequel élément à pression de ressort (14) est disposé au-delà du plan (E) vertical par rapport au plan de denture du profilé à crémaillère (7) et contenant l'axe de la colonne de direction (6) et exerce, en position de marche en ligne droite du mécanisme de direction, une force de torsion sur l'écrou de direction (4) **caractérisé**
en ce que
l'élément à pression de ressort (14) est conçu en forme de disque, d'une seule partie, disposé entre l'arbre de direction (10) et le profilé à crémaillère (7) et prend appui d'une part, en position de marche en ligne droite, avec un prolongement (18) dirigé vers l'extérieur dans le sens radial, sur le profilé à crémaillère (7) avec précontrainte, et, d'autre part, sur l'arbre de direction (10).

2. Mécanisme de direction selon la revendication 1,
**caractérisé** en ce que
- l'élément à pression de ressort (14) est constitué de deux bagues élastiques (15, 16) disposées de façon concentrique l'une par rapport à l'autre sur l'arbre de direction (10),
- les deux bagues élastiques (15, 16) sont reliées entre elles,
- le prolongement (18) dirigé vers l'extérieur dans le sens radial est disposé sur la bague élastique extérieure (15) et que
- la bague élastique intérieure (16) prend appui sur l'arbre de direction (10) sur son côté tourné vers le profité à crémaillère (7).

3. Mécanisme de direction selon la revendication 2,
**caractérisé** en ce que les deux bagues élastiques (15, 16) sont reliées l'une à l'autre par un pont de liaison (17) sur leur côté opposé au profité à crémaillère (7).

4. Mécanisme de direction selon la revendication 2,
**caractérisé** en ce que le prolongement (18) de la bague élastique extérieure (15) présente une forme adaptée à la denture du secteur denté (8).

5. Mécanisme de direction selon la revendication 4,
**caractérisé** en ce que le prolongement (18) présente la forme de la dent centrale du secteur denté (8).

6. Mécanisme de direction selon la revendication 2,
**caractérisé** en ce que la bague élastique intérieure (16) présente une came (20) dirigée vers l'intérieur dans le sens radial pour l'appui sur l'arbre de direction (10).

7. Mécanisme de direction selon l'une des revendications 2 à 6, **caractérisé** en ce que les deux bagues élastiques (15, 16) présentent un tracé de coupe transversale optimalisé au niveau des tensions.

8. Mécanisme de direction selon la revendication 1 ou 2,
**caractérisé** en ce que l'élément à pression de ressort (14) est maintenu de façon rigide à la torsion sur l'arbre de direction (10).

9. Mécanisme de direction selon la revendication 8,
**caractérisé** en ce que l'élément à pression de ressort (14) est bloqué contre la torsion par une goupille (21) fixée dans le secteur denté (8) et par l'intermédiaire d'une rainure (22) disposée dans la bague élastique extérieure (15).
